# EUROPEAN PATENT APPLICATION

(11) **EP 4 489 098 A1**
(43) Date of publication of application: **08.01.2025**
(21) Application number: 24185562.6
(22) Date of filing: 28.06.2024
(51) Int. Cl.: H01M 4/13, H01M 10/0525, H01M 50/103, H01M 50/186, H01M 50/533

(54) **SECONDARY BATTERY AND ELECTROCHEMICAL DEVICE**

(30) Priority: 03.07.2023 CN 202310797619
(71) Applicant: Ningde Amperex Technology Ltd., Ningde City, Fujian 352100 (CN)
(72) Inventor: LI, Lei, Ningde City, Fujian Province 352100 (CN); HUANG, Yawen, Ningde City, Fujian Province 352100 (CN)
(74) Representative: Icosa

(57) **Abstract**

A secondary battery (1) includes a housing (11), an electrode assembly (12), a first tab (13), and a first bonding piece (14). The electrode assembly (12) is located in the housing (11). The electrode assembly (12) includes a first electrode plate (121). The first electrode plate (121) includes a first current collector (1211)and a first active material layer (1212). The first active material layer (1212) includes a first groove (12121) that exposes a first surface of the first current collector (1211). The exposed first surface includes a first region (12122) and a second region (12123). The first bonding piece (14) includes a first sealing portion (141) and a first filling portion (142) connected to each other. At least a part of the first sealing portion (141) is disposed between the second part (132) and the housing (11) to bond the second part (132) and the housing (11) together. When viewed along a thickness direction of the first electrode plate (121), the first filling portion (142) is located in the second region (12123). When the secondary battery (1) of this application is subjected to pressurized chemical formation and cycling, the risk of deformation of the battery is reduced.

## Description

### TECHNICAL FIELD

This application relates to the technical field of electrochemical device, and in particular, to a secondary battery and an electrochemical device.

### BACKGROUND

A lithium-ion battery is the key to ensuring normal use of an electronic device. The cycle performance of a battery cell is crucial to the service life of the lithium-ion battery. In the field of electrochemical devices, a Middle Middle Tab (MMT) design can effectively reduce an internal resistance of the lithium-ion battery to improve the cycle performance of the lithium-ion battery.

In a process of implementing some embodiments of this application, the applicant hereof finds that a universal MMT jelly-roll structure currently needs to allow a tolerance for processes such as tab welding, so that the active material film coating at the weld joint of the tab needs to be removed by a specified amount in dimension. However, a blank substrate exposed after removal of an amount of the coating layer sharply differs in thickness from an adjacent region, thereby leading to nonuniform release of expansion stress during cycling of the battery cell, giving rise to deformation of the thick battery cell, and bringing about a series of performance risks.

### SUMMARY

A main technical objective of this application is to provide a secondary battery and an electrochemical device to effectively solve the problem that the secondary battery is prone to deform.

A technical solution disclosed in an embodiment of this application is: a secondary battery is provided, and the secondary battery includes a housing, an electrode assembly, a first tab, and a first bonding piece. The electrode assembly is located in the housing. The electrode assembly includes a first electrode plate. The first electrode plate includes a first current collector and a first active material layer disposed on the first current collector. The first active material layer includes a first groove that exposes a surface of the first current collector. The surface of the first current collector exposed by the first groove is a first surface. The first surface includes a first region and a second region connected to each other. The first tab is electrically connected to the first current collector. The first tab includes a first part and a second part connected to each other. A region connected to the first surface in the first part is the first region. A remaining region other than the first region in the first surface is a second region. The second part extends out of the housing along a first direction. The first bonding piece includes a first sealing portion and a first filling portion connected to each other. At least a part of the first sealing portion is disposed between the second part and the housing to bond the second part and the housing together. When viewed along a thickness direction of the first electrode plate, the first filling portion is located in the second region.

In some embodiments, along the thickness direction of the first electrode plate, a depth of the first groove is h₁, a thickness of the first filling portion is h₂, and a thickness of the first part is h₃, where 0.5min{hi, h₃} ≤ h₂ ≤ max{hi, h₃}.

In some embodiments, min{h₁, h₃} ≤ h₂ ≤ max{h₁, h₃}.

In some embodiments, a thickness of the first sealing portion is equal to a thickness of the first filling portion. A material of the first sealing portion is identical to a material of the first filling portion, where 0.7min{hi, h₃} ≤ h₂ ≤ max{h₁, h₃}.

In some embodiments, along the thickness direction of the first electrode plate, a ratio of a projected area of the first filling portion to an area of the second region is: 40% to 100%.

In some embodiments, the first filling portion includes a first colloid and a second colloid. Along a second direction, the first colloid is disposed on a first side of the first part, and the second colloid is disposed on a second side of the first part. The first side is disposed opposite to the second side of the first part. Both a projection of the first colloid and a projection of the second colloid along the thickness direction of the first electrode plate are located in the second region. The first direction is perpendicular to the second direction. The length of the secondary battery extends long the first direction, and the width of the secondary battery extends long the second direction.

In some embodiments, along the first direction, a length of the first groove is b₁, a length of the first part is b₂, and a length of the first colloid is b₃, satisfying: 0.5b₂ ≤ b₃ ≤ b₁; and/or, along the first direction, a length of the first groove is b₁, a length of the first part is b₂, and a length of the second colloid is b₄, satisfying: 0.5b₂ ≤ b₄ ≤ b₁.

Along the second direction, a width of the first groove is k₁, a width of the first part is k₂, a width of the first colloid is k₃, a width of the second colloid is k₄, satisfying: k₂ + k₃ + k₄ + 1 mm ≤ k₁.

In some embodiments, the first filling portion further includes a third colloid. The third colloid is connected to the first colloid and the second colloid. Along the first direction, the third colloid is at least partially disposed between an end portion of the first part and the first active material layer. The third colloid is disposed in the second region.

In some embodiments, the first colloid is connected to the first side, and the second colloid is connected to the second side.

In some embodiments, the first sealing portion is made of a material including at least one of polystyrene, polyethylene, or polypropylene.

In some embodiments, the first filling portion is made of a material satisfying the following conditions: (1) a melting temperature is higher than 100 °C; and (2) a Rockwell hardness is less than 100.

In some embodiments, the housing is a packaging bag.

In some embodiments, the electrode assembly further includes a second electrode plate and a separator. The separator is located between the first electrode plate and the second electrode plate. The second electrode plate includes a second current collector and a second active material layer disposed on the second current collector. The second active material layer includes a second groove that exposes a surface of the second current collector. The surface of the second current collector exposed by the second groove is a second surface. The second surface includes a third region and a fourth region connected to each other. The secondary battery further includes a second tab and a second bonding piece. The second tab is electrically connected to the second current collector. The second tab includes a third part and a fourth part connected to each other. A region connected to the second surface in the third part is the third region, and a remaining region other than the third region in the second surface is a fourth region. The fourth part extends out of the housing along the first direction. The second bonding piece includes a second sealing portion and a second filling portion connected to each other. At least a part of the second sealing portion is disposed between the fourth part and the housing to bond the fourth part and the housing together. When viewed along a thickness direction of the second electrode plate, the second filling portion is located in the fourth region.

Another technical solution disclosed in an embodiment of this application is: an electrochemical device is provided, including the above secondary battery.

The secondary battery disclosed in an embodiment of this application includes a housing, an electrode assembly, a first tab, and a first bonding piece. The electrode assembly is disposed in the housing, and the electrode assembly includes a first electrode plate. The first electrode plate includes a first current collector and a first active material layer disposed on the first current collector. The first active material layer includes a first groove that exposes a surface of the first current collector. The surface of the first current collector exposed by the first groove is a first surface, and the exposed first surface includes a first region and a second region. The first tab includes a first part and a second part connected to each other. A region connected to the first surface in the first part is the first region. The second part extends out of the housing along a first direction. The first bonding piece includes a first sealing portion and a first filling portion connected to each other. At least a part of the first sealing portion is disposed between the second part and the housing to bond the second part and the housing together. When viewed along a thickness direction of the first electrode plate, the first filling portion is located in the second region. With the first filling portion disposed in the second region, a difference between the thickness of the first electrode plate at the first part and the thickness at the first active material layer is reduced effectively, thereby improving the uniformity of thickness distribution of the first electrode plate, and in turn, improving the flatness of the first electrode plate, and reducing the risk of deformation when the secondary battery is subjected to pressurized chemical formation and cycling.

### BRIEF DESCRIPTION OF DRAWINGS

To describe the technical solutions in the specific embodiments of this application or the prior art more clearly, the following outlines the drawings that need to be used in the descriptions of the specific embodiments of this application or the prior art. In all the drawings, similar elements or parts are generally identified by similar reference numerals. The elements or parts in the drawings are not necessarily drawn to scale.
FIG. 1 is a partial cross-sectional view of a sectioned housing of a secondary battery according to an embodiment of this application;
FIG. 2 is a cross-sectional view of an electrode assembly sectioned along an A-A line shown in FIG. 1 in a secondary battery according to an embodiment of this application;
FIG. 3 is an exploded view of a stacked-type electrode assembly in a secondary battery according to another embodiment of this application;
FIG. 4 is a partial exploded view of a first electrode plate and a first tab in a secondary battery according to an embodiment of this application;
FIG. 5 is a schematic diagram of a secondary battery viewed along a thickness direction of a first electrode plate according to an embodiment of this application;
FIG. 6 is a schematic diagram of length markings of a first groove, a first tab, and a first bonding piece in a secondary battery according to an embodiment of this application;
FIG. 7 is a schematic diagram of width markings of a first groove, a first tab, and a first bonding piece in a secondary battery according to an embodiment of this application;
FIG. 8 is a cross-sectional view of a first groove, a first tab, and a first bonding piece sectioned along a B-B line shown in FIG. 7 in a secondary battery according to an embodiment of this application;
FIG. 9 is a schematic diagram of thickness markings of a first groove, a first tab, and a first bonding piece in a secondary battery according to another embodiment of this application; and
FIG. 10 is a schematic diagram of a first filling portion containing a third colloid in a secondary battery according to another embodiment of this application.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. A direction or a positional relationship indicated by the terms such as "up", "down", "in", "out", "vertical", and "horizontal" used herein is a direction or positional relationship based on the illustration in the drawings, and is merely intended for ease or brevity of describing this application, but does not indicate or imply that the indicated device or component is necessarily located in the specified direction or constructed or operated in the specified direction. Therefore, such terms are not construed as a limitation on this application. In addition, the terms "first" and "second" are merely used for descriptive purposes, but not construed as indicating or implying relative importance.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

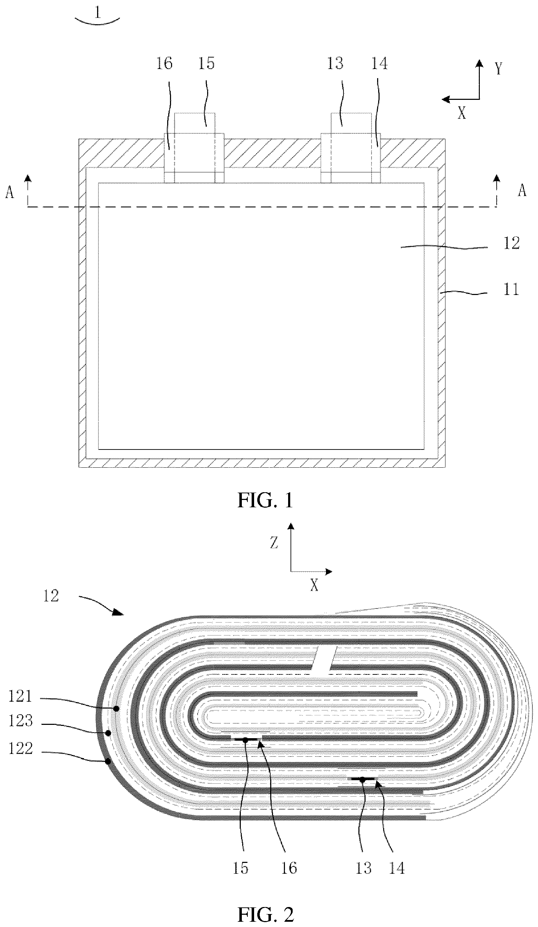

Referring primarily to FIG. 1 and FIG. 2, the secondary battery 1 includes a housing 11, an electrode assembly 12, a first tab 13, a first bonding piece 14, a second tab 15, and a second bonding piece 16. The electrode assembly 12 is accommodated in the housing 11. A first end of the first tab 13 is electrically connected to the electrode assembly 12. A second end of the first tab 13 extends out of the housing 11 from inside the housing 11 along a first direction Y. A first end of the second tab 15 is electrically connected to the electrode assembly 12. A second end of the second tab 15 extends out of the housing 11 from inside the housing 11. The first direction Y is a length direction of the secondary battery 1, and the second direction X is a width direction of the secondary battery 1. The first direction Y, the second direction X, and the thickness direction Z of the secondary battery 1 are perpendicular to each other. In a jelly-roll electrode assembly 12, the first direction Y is parallel to a winding axis of the electrode assembly 12. A direction in which an unwound electrode plate in the electrode assembly 12 extends is the second direction X.

The first bonding piece 14 is partially disposed between the first tab 13 and the housing 11. The first bonding piece 14 is bonded to the first tab 13 and the housing 11 separately to seal a clearance between the first tab 13 and the housing 11. The first bonding piece 14 is partially disposed at a junction between the first tab 13 and the electrode assembly 12 to fill the clearance between the first tab 13 and the electrode assembly 12.

The second bonding piece 16 is partially disposed between the second tab 15 and the housing 11. The second bonding piece 16 is bonded to the second tab 15 and the housing 11 separately to seal a clearance between the second tab 15 and the housing 11. The second bonding piece 16 is partially disposed at the junction between the second tab 15 and the electrode assembly 12 to fill the clearance between the second tab 15 and the electrode assembly 12.

Understandably, the secondary battery 1 may be a pouch battery. For example, the housing 11 is a soft-shell packaging bag made by processing an aluminum laminated film. Alternatively, the secondary battery 1 may be a hard-shell battery. For example, the housing 11 is a square or cylindrical rigid aluminum shell.

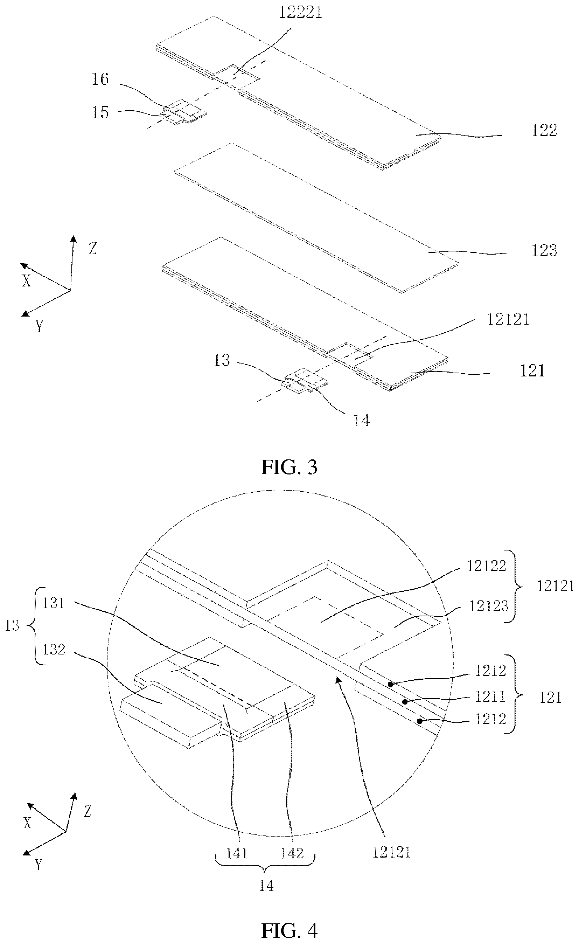

For the above electrode assembly 12, referring to FIG. 2, the electrode assembly 12 includes a first electrode plate 121, a second electrode plate 122, and a separator 123. The separator 123 is disposed between the first electrode plate 121 and the second electrode plate 122. The first electrode plate 121, the separator 123, and the second electrode plate 122 are stacked in sequence and then wound to form a jelly-roll electrode assembly 12. Alternatively, referring to FIG. 3, the first electrode plate 121, the separator 123, and the second electrode plate 122 are stacked in sequence to form a stacked-type electrode assembly 12. This embodiment is described by using a jelly-roll electrode assembly 12 as an example.

Referring to FIG. 4, the first electrode plate 121 includes a first current collector 1211 and a first active material layer 1212 disposed on a surface of the first current collector 1211. The first active material layer 1212 is disposed on at least one surface of the first current collector 1211. The first active material layer 1212 is configured to electrochemically react with the second electrode plate 122 to store or release electrical energy. When both surfaces of the first current collector 1211 are coated with the first active material layer 1212, the first active material layer 1212 on one of the surfaces includes a first groove 12121 that exposes the surface of the first current collector. The surface of the first current collector exposed by the first groove is a first surface. A first end of the first tab 13 is welded to the first surface inside the first groove 12121 to enable the first tab 13 to be connected to the first current collector 1211 to implement electrical conduction. A part of the first bonding piece 14 is disposed inside the first groove 12121. The first bonding piece 14 is configured to fill the clearance between the first tab 13 and the first active material layer 1212 after the first tab 13 is connected to the first current collector 1211. This reduces the difference between the thickness of the first electrode plate 121 at the first tab 13 and the thickness of the first electrode plate at the first active material layer 1212, improves the uniformity of the thickness distribution of the first electrode plate 121, improves the flatness of the first electrode plate 121, and in turn, reduces the risk of deformation brought about by nonuniform stress release of the first electrode plate 121.

In other embodiments, still referring to FIG. 4, when both sides of the first current collector 1211 are coated with the first active material layer 1212, the first groove 12121 is created on the first active material layers 1212 on both sides. The two first grooves 12121 are positioned corresponding to each other.

Referring to FIG. 4, the first direction Y in this application means a width direction of the first electrode plate 121 unwound, and the second direction X means a length direction of the first electrode plate 121 unwound. The first direction Y is perpendicular to the second direction X. The thickness direction Z of the first electrode plate 121 is a direction perpendicular to the first surface of the first current collector 1211. The first direction Y, the second direction X, and the thickness direction Z of the first electrode plate 121 are perpendicular to each other.

Referring to FIG. 4, the first surface exposed by the first groove 12121 includes a first region 12122 and a second region 12123 connected to each other. After the first tab 13 is welded to the first current collector 1211, along the thickness direction Z of the first electrode plate 121, a region in which the first tab 13 is connected to the exposed first surface on the first current collector 1211 is the first region 12122, and a remaining region other than the first region 12122 in the exposed first surface is the second region 12123. The dashed box in the first surface exposed by the first groove 12121 in FIG. 4 denotes the first region 12122, and the remaining region in the first surface denotes the second region 12123.

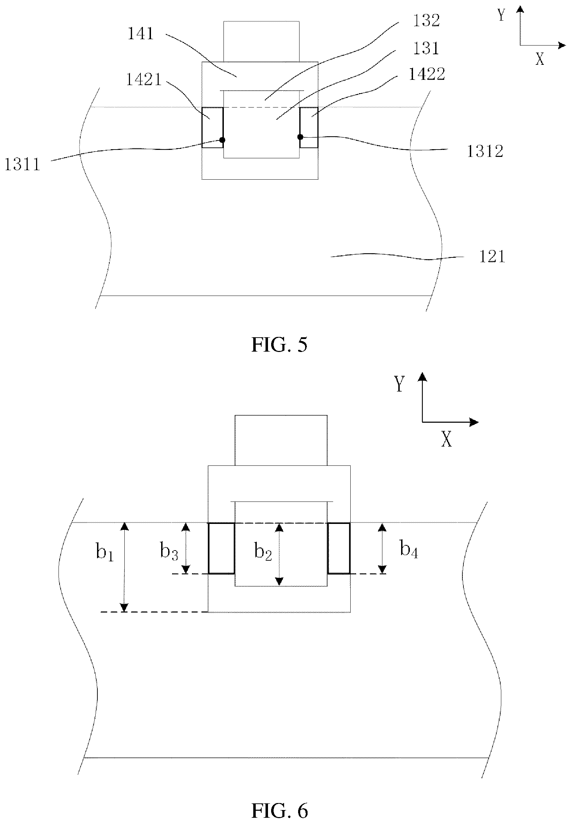

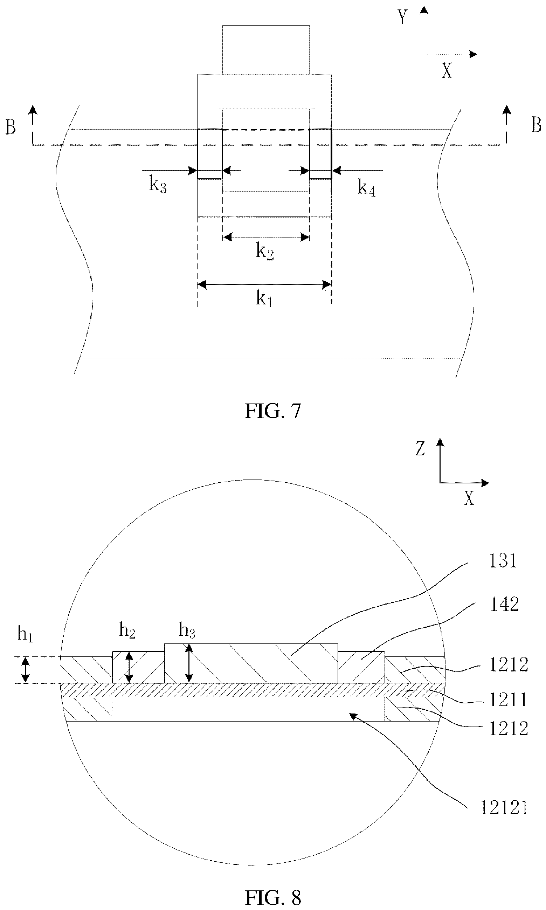

Referring to FIG. 6, along the first direction Y, the length of the first groove 12121 is b₁. Referring to FIG. 8, along the thickness direction Z of the first electrode plate 121, the depth of the first groove 12121 is h₁.

For the first tab 13, referring to FIG. 4 and FIG. 5, the first tab 13 includes a first part 131 and a second part 132 connected to each other. The first part 131 is disposed in the first region 12122 in the first surface, and the second part 132 extends out of the housing 11 along the first direction Y. Along the thickness direction Z of the first electrode plate 121, a projection of the first part 131 does not overlap the second region 12123. Referring to FIG. 8, along the thickness direction Z of the first electrode plate 121, the thickness of the first part 131 is h₃. Understandably, when viewed along the thickness direction Z of the first electrode plate 121 (for example, from the viewing angle in FIG. 5), a part, located inside the first groove 12121, of the first tab 13, is defined as the first part 131; and a part, located outside the first groove 12121, of the first tab 13, is defined as the second part 132. Referring to FIG. 6, along the first direction Y, the length of the first part 131 is b₂.

For the first bonding piece 14, referring to FIG. 4, the first bonding piece 14 includes a first sealing portion 141 and a first filling portion 142 connected to each other. At least a part of the first sealing portion 141 is disposed between the second part 132 of the first tab 13 and the housing 11. The first sealing portion 141 bonds the second part 132 to the housing 11 (as shown in FIG. 1). The first sealing portion 141 is configured to seal the clearance between the second part 132 and the housing 11 during packaging of the secondary battery 1, thereby ensuring the hermeticity inside the housing 11. Referring to FIG. 4 and FIG. 5, the first filling portion 142 is disposed in the second region 12123 of the first groove 12121. The first filling portion 142 is configured to fill the clearance between the first part 131 and the first active material layer 1212 after the first tab 13 is connected to the first current collector 1211, thereby effectively solving the problem that the first electrode plate 121 is prone to S-twisting and deformation due to a sharp difference between the thickness of the first electrode plate 121 at the first part 131 and the thickness at the first active material layer 1212.

That the first filling portion 142 is disposed inside the second region 12123 of the first groove 12121 means that: as shown in FIG. 4 and FIG. 5, when viewed along the thickness direction Z of the first electrode plate 121, the first filling portion 142 is located inside a contour enclosed by the second region 12123; and, when viewed along the first direction Y, that is, from the viewing angle in FIG. 8, the thickness of the first filling portion 142 may be less than or equal to the thickness of the first active material layer 1212. Alternatively, the thickness of the first filling portion 142 may be greater than the thickness of the first active material layer 1212. In other words, in the thickness direction Z of the first electrode plate 121, the first filling portion 142 may extend beyond the first groove 12121.

In some embodiments, that the first sealing portion 141 is connected to the first filling portion 142 may be understood as a direct connection between the first sealing portion 141 and the first filling portion 142, as shown in FIG. 4. However, in some other embodiments, that the first sealing portion 141 is connected to the first filling portion 142 may be understood as an indirect connection formed between the first sealing portion 141 and the first filling portion 142 through the first tab 13. The direct connection between the first sealing portion 141 and the first filling portion 142 can reduce the difficulty of processing and manufacturing the first bonding piece 14. The first sealing portion 141 and the first filling portion 142 may be formed in one piece and connected to the first tab 13. The indirect connection between the first sealing portion 141 and the first filling portion 142 through the first tab 13 can reduce the material consumed for manufacturing the first bonding piece 14 and save the production cost on the one hand, and can reduce the weight of the first bonding piece 14 and reduce the overall weight of the secondary battery 1 on the other hand. Whether the first sealing portion 141 and the first filling portion 142 are connected directly or indirectly for manufacturing may be selected according to the actual situation in the production process.

The first filling portion 142 is made of a material satisfying the following conditions: (1) a melting temperature is higher than 100 °C; and (2) a Rockwell hardness is less than 100. For the above condition (1), because the temperature for safe use of the secondary battery 1 is 100 °C or below, in order to ensure a good filling effect of the first filling portion 142, the melting temperature of the material of the first filling portion 142 needs to be higher than 100 °C, so as to make the first filling portion 142 thermally stable and not prone to melting and deformation. For the above condition (2), the Rockwell hardness of the material of the first filling portion 142 is less than 100, thereby making the first filling portion 142 highly flexible while meeting the hardness requirement, and preventing the brittleness of the material from being increased by high hardness of the first filling portion 142, where the brittleness makes the material prone to be ruptured in an impact or drop or other situations.

The first sealing portion 141 is made of a material including at least one of polystyrene, polyethylene, or polypropylene. When the first sealing portion 141 and the first filling portion 142 are formed in one piece, the material of the first filling portion 142 is the same as the material of the first sealing portion 141.

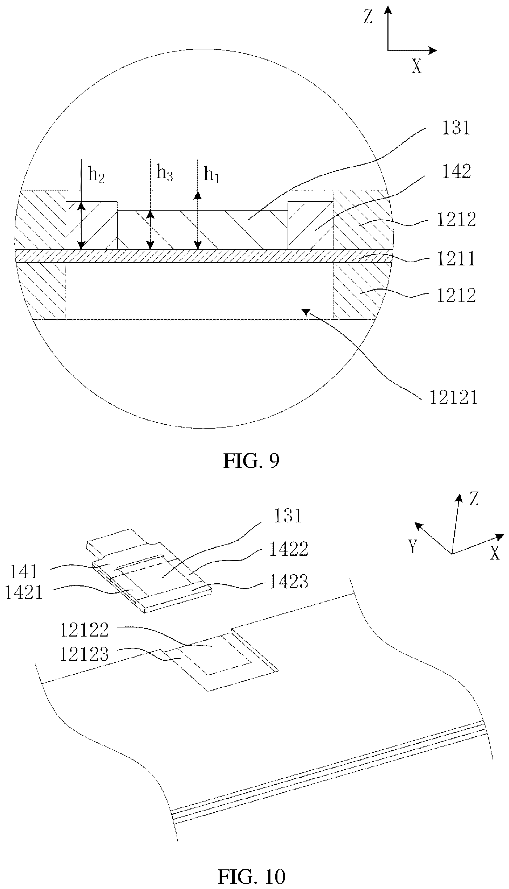

Referring to FIG. 8 and FIG. 9, in an embodiment, along the thickness direction Z of the first electrode plate 121, the thickness of the first filling portion 142 is h₂. The depth h₁ of the first groove 12121, the thickness h₂ of the first filling portion 142, and the thickness h₃ of the first part 131 satisfy: 0.5min{hi, h₃} ≤ h₂ ≤ max{h₁, h₃}, where min{ h₁, h₃} means a minimum value of h₁ or h₃, and max{h₁, h₃} means a maximum value of h₁ or h₃. When the thickness of the first active material layer 1212 is less than the thickness of the first tab 13, h₁ is less than h₃ (as shown in FIG. 8), satisfying: 0.5h₁ ≤ h₂ ≤ h₃; when the thickness of the first active material layer 1212 is greater than the thickness of the first tab 13, h₁ is greater than h₃ (as shown in FIG. 9), satisfying: 0.5h₃ ≤ h₂ ≤ h₁; and, when the thickness of the first active material layer 1212 is equal to the thickness of the first tab 13, h₁ is equal to h₃. By disposing the first filling portion 142 in the second region 12123 and controlling the thickness of the first filling portion 142 to fall between the thickness of the first active material layer 1212 and the thickness of the first tab 13, this application can reduce the difference between the thickness of the first electrode plate 121 at the first tab 13 and the thickness at the first active material layer 1212, improve the flatness of the first electrode plate 121, reduce the deformation of the first electrode plate 121, and ensure good morphology of the first electrode plate 121. In a process of gradual increasing of the thickness of the first filling portion 142 until the thickness is equal to the thickness of the first part 131 or equal to the thickness of the first active material layer 1212, the thickness of the first filling portion 142 is negatively correlated with the amount of deformation of the first electrode plate 121. In other words, the larger the thickness of the first filling portion 142, the smaller the difference between the thickness of the first electrode plate 121 at the first tab 13 and the thickness at the first active material layer 1212, the flatter of the first electrode plate 121, and the smaller the amount of deformation of the first electrode plate 121. In order to prevent the energy density of the secondary battery 1 from being reduced by an excessive thickness of the first filling portion 142, the thickness of the first filling portion 142 needs to be controlled not to exceed the greater of the thickness of the first part 131 of the first tab 13 and the thickness of the first active material layer 1212.

In some other embodiments, the depth h₁ of the first groove 12121, the thickness h₂ of the first filling portion 142, and the thickness h₃ of the first part 131 satisfy: min{h₁, h₃} ≤ h₂ ≤ max{hi, h₃}. The above arrangement makes the first filling portion 142 smooth out the thickness difference of the first electrode plate at the second region 12123 in the thickness direction Z of the first electrode plate 121, thereby improving the uniformity of the thickness distribution of the first electrode plate 121, improving the flatness of the first electrode plate 121, and in turn, reducing the risk of deformation brought about by nonuniform stress release of the first electrode plate 121.

The small thickness of the first sealing portion 141 is unable to meet the requirement of sealing the clearance between the first tab 13 and the housing 11, and the excessive thickness of the first sealing portion 141 increases the overall weight of the secondary battery 1. Therefore, when the first sealing portion 141 and the first filling portion 142 are formed in one piece and directly connected, the thickness h₂ is equal between the first sealing portion 141 and the first filling portion 142. In other words, the thickness of the first filling portion 142 is directly related to the thickness of the first sealing portion 141. Therefore, the design of thickness of the first filling portion 142 needs to consider the impact on the thickness of the first sealing portion 141. In an embodiment, the thickness h₂ of the first filling portion 142 and the thickness h₃ of the first part 131 of the first tab 13 satisfy: 0.7min{hi, h₃} ≤ h₂ ≤ max{hi, h₃}. Through the above setting, the thickness of the first sealing portion 141 is made equivalent to the thickness of the first filling portion 142 formed in one piece. In other words, the first bonding piece 14 can satisfy requirements of both the sealing function of the first sealing portion 141 and the filling function of the first filling portion 142.

It is worth noting that the thickness is deemed to be equal between the first sealing portion and the first filling portion as long as the difference in thickness between the first sealing portion 141 and the first filling portion falls within 5%.

Referring to FIG. 5, in some embodiments, viewed along the thickness direction Z of the first electrode plate 121, a ratio of an orthogonally projected area of the first filling portion 142 on the first current collector 1211 to an area of the second region 12123 in the first groove 12121 is 40% to 100%. The ratio of the projected area of the first filling portion 142 to the area of the second region 12123 can reflect the degree of filling by the first filling portion 142 in the second region 12123. A higher ratio of the projected area of the first filling portion to the area of the second region indicates a larger proportion of the first filling portion 142 in the second region 12123 and higher flatness of the first electrode plate 121. In some other embodiments, the ratio of the orthogonally projected area of the first filling portion 142 on the first current collector 1211 to the area of the second region 12123 in the first groove 12121 is 70% to 100%.

Referring to FIG. 4 and FIG. 5, the first filling portion 142 includes a first colloid 1421 and a second colloid 1422. Along a second direction X, the first colloid 1421 is disposed on a first side 1311 of the first part 131, and the second colloid 1422 is disposed on a second side 1312 of the first part 131. The first side 1311 is disposed opposite to the second side 1312 of the first part 131. In addition, along the thickness direction Z of the first electrode plate 121, the orthogonal projections of both the first colloid 1421 and the second colloid 1422 on the first current collector 1211 are located in the second region 12123.

Referring to FIG. 5 and FIG. 6 together, along the first direction Y, the length of the first groove 12121 is b₁, the length of the first part 131 is b₂, and the length of the first colloid 1421 is b₃, satisfying: 0.5b₂ ≤ b₃ ≤ b₁. By setting the length of the first colloid 1421 to be at least a half of the length of the first part 131, the first colloid 1421 fills the second area 12123 to an effect that is enough to effectively improve the flatness of the first electrode plate 121. In addition, with the increase of the length of the first colloid 1421, the deformation of the first electrode plate 121 is reduced.

Along the first direction Y, the length of the first groove 12121 is b₁, the length of the first part 131 is b₂, and the length of the second colloid 1422 is b₄, satisfying: 0.5b₂ ≤ b₄ ≤ b₁. Similarly, the length of the first colloid 1421 may be set to be at least a half of the length of the first part 131. Understandably, the length of the first colloid 1421 may be set to be identical to or different from the length of the second colloid 1422.

In some embodiments, the first colloid 1421 is connected to the first side 1311 of the first part 131, and the second colloid 1422 is connected to the second side 1312 of the first part 131. With the above settings, the first colloid 1421 and the second colloid 1422 are connected to the first part 131 of the first tab 13 to form a whole first, and then the whole is disposed in the first groove 12121, and the first part 131 is welded to the first current collector 1211 to enhance the welding efficiency. After completion of the welding between the first part 131 and the first current collector 1211, a thickness difference exists between the first part 131 and the first current collector 1211 along the thickness direction Z of the first electrode plate 121. With the first colloid 1421 and the second colloid 1422 disposed on both sides of the first part 131, the first colloid 1421 and the second colloid 1422 both exert a supporting effect on the first part 131, thereby making the burrs at the edge of the first tab 13 less prone to shear the first current collector 1211, and in turn, protecting the first current collector 1211, and reducing the risk of fracturing the first current collector 1211 at the edge of the first tab 13 at a later stage of cycling. The repeated contact between the first electrode plate 121 and the first tab 13 during cycling of the secondary battery can be cushioned by the first colloid 1421 and the second colloid 1422 embedded inside, thereby improving the reliability of the secondary battery during cycling. Meanwhile, in a mechanical safety test (such as a vibration test and a drop test) of the secondary battery, the position of the first tab 13 is fixed, thereby reducing the probability of tearing and failure of the first current collector 1211, and improving the safety performance of the secondary battery.

Referring to FIG. 7, along the second direction X, the width of the first groove 12121 is k₁, the width of the first part 131 is k₂, the width of the first colloid 1421 is k₃, the width of the second colloid 1421 is k₄, satisfying: k₂ + k₃ + k₄ + 1 mm ≤ k₁. When the widths of the first colloid 1421 and the second colloid 1422 satisfy the above requirement, the first colloid 1421 and the second colloid 1422 are enabled to well smooth out the thickness difference between the first part 131 and the first active material layer 1212, that is, reduce the thickness distribution gradient between the first active material layer 1212, the first colloid 1421, the first part 131, the second colloid 1422, and the first active material layer 1212 along the second direction X, thereby improving the flatness of the first electrode plate 121 and reducing the deformation of the first electrode plate 121.

In some embodiments, referring to FIG. 10, the first filling portion 142 further includes a third colloid 1423. One end of the third colloid 1423 is connected to the first colloid 1421, and another end of the third colloid 1423 is connected to the second colloid 1422. Along the first direction Y, the third colloid 1423 is at least partially located between the end portion of the first part 131 and the first active material layer 1212. In other words, the third colloid 1423 is disposed inside the second region 12123 of the first groove 12121.

When neither the length of the first colloid 1421 nor the length of the second colloid 1422 exceeds the length of the first part 131 along the first direction Y, the width of the third colloid 1423 is greater than the width of the first part 131 along the second direction X, so as to implement connection between one end of the third colloid 1423 and the first colloid 1421 as well as connection between the other end of the third colloid 1423 and the second colloid 1422. When the lengths of the first colloid 1421 and the second colloid 1422 exceed the length of the first part 131 along the first direction Y, one end of the third colloid 1423 may be directly connected to the first colloid 1421 in the second direction X, and the other end of the third colloid 1423 is directly connected to the second colloid 1422. Understandably, in some embodiments, the first colloid 1421, the second colloid 1422, and the third colloid 1423 are made of the same material and are of the same thickness, and are formed in one piece. As shown in FIG. 10, the first colloid 1421, the second colloid 1422, and the third colloid 1423 are connected to the edge of the first part 131.

Referring to FIG. 2 and FIG. 3, the second electrode plate 122 includes a second current collector and a second active material layer disposed on the second current collector. The second active material layer is disposed on at least one surface of the second current collector. The second active material layer is configured to electrochemically react with the first electrode plate 121 to store or release electrical energy. When both surfaces of the second current collector are coated with the second active material layer, the second active material layer on one of the surfaces includes a second groove 12221 that exposes the surface of the second current collector. The surface of the second current collector exposed by the second groove is a second surface. A first end of the second tab 15 is welded to the exposed second surface in the second groove 12221 to enable the second tab 15 to be connected to the second current collector to implement electrical conduction. A part of the second bonding piece 16 is disposed inside the second groove 12221. The second bonding piece 16 is configured to fill the clearance between the second tab 15 and the second active material layer after the second tab 15 is connected to the second current collector. This reduces the difference between the thickness of the whole electrode assembly 12 at the second tab 15 and the thickness at the second active material layer, improves the uniformity of the thickness distribution of the second electrode plate 122, improves the flatness of the second electrode plate 122, and in turn, reduces the risk of deformation brought about by nonuniform stress release of the second electrode plate 122.

In other embodiments, still referring to FIG. 3, when both sides of the second current collector are coated with the second active material layer, the second groove 12221 is created on the second active material layers on both sides. The two second grooves 12221 are positioned corresponding to each other.

The second groove 12221 includes a third region and a fourth region connected to each other. After the second tab 15 is connected to the second current collector, along the thickness direction Z of the second electrode plate 122, a region in which the second tab 15 is connected to the exposed second surface on the second current collector is the third region. A remaining region other than the third region in the exposed second surface is the fourth region.

The second tab 15 includes a third part and a fourth part connected to each other. The third part is disposed in the third region in the second groove 12221, and the fourth part extends out of the housing 11 along the first direction Y. Along the thickness direction Z of the second electrode plate 122, a projection of the third part does not overlap the fourth region. Understandably, when viewed along the thickness direction Z of the second electrode plate 122, a part, located inside the second groove 12221, of the second tab 15, is defined as the third part; and a part, located outside the second groove 12221, of the second tab 15, is defined as the fourth part.

Referring to FIG. 3, the second bonding piece 16 includes a second sealing portion and a second filling portion connected to each other. At least a part of the second sealing portion is disposed between the fourth part of the second tab 15 and the housing 11. The second sealing portion is bonded to the fourth part and the housing 11 separately. The second sealing portion is configured to seal the clearance between the fourth part and the housing 11 during packaging of the secondary battery 1, thereby ensuring the hermeticity inside the housing 11. The second filling portion is disposed in the fourth region of the second groove 12221. The second filling portion is configured to fill the clearance between the third part and the second active material layer after the second tab 15 is connected to the second current collector, thereby effectively solving the problem that the second electrode plate 122 is prone to S-twisting and deformation due to a sharp difference between the thickness of the second electrode plate 122 at the third part and the thickness at the second active material layer.

The secondary battery 1 disclosed in an embodiment of this application includes a housing 11, an electrode assembly 12, a first tab 13, and a first bonding piece 14. The electrode assembly 12 is disposed in the housing 11, and the electrode assembly 12 includes a first electrode plate 121. The first electrode plate 121 includes a first current collector 1211 and a first active material layer 1212 disposed on the first current collector 1211. The first active material layer 1212 includes a first groove 12121 that exposes a surface of the first current collector. The surface of the first current collector exposed by the first groove is a first surface, and the first surface includes a first region 12122 and a second region 12123. The first tab 13 includes a first part 131 and a second part 132 connected to each other. A region connected to the first surface in the first part 131 is the first region 12122. The second part 132 extends out of the housing 11 along a first direction Y. Along a thickness direction Z of the first electrode plate 121, the projection of the first part 131 does not overlap the second region 12123. The first bonding piece 14 includes a first sealing portion 141 and a first filling portion 142 connected to each other. At least a part of the first sealing portion 141 is disposed between the second part 132 and the housing 11 to bond the second part 132 and the housing 11 together. When viewed along the thickness direction Z of the first electrode plate 121, the first filling portion 142 is located in the second region 12123. With the first filling portion 142 disposed in the second region 12123, the difference between the thickness of the first electrode plate 121 at the first part 131 and the thickness at the first active material layer 1212 is reduced effectively, thereby improving the uniformity of the thickness distribution of the first electrode plate 121, improving the flatness of the first electrode plate 121, and in turn, reducing the risk of deformation brought about by nonuniform stress release of the first electrode plate 121.

This application further provides an electrochemical device embodiment. The electrochemical device includes the secondary battery 1. The specific structure and functions of the secondary battery 1 may be learned by referring to the foregoing embodiments, details of which are omitted here.

For ease of understanding the technical solutions and beneficial effects of the secondary battery according to an embodiment of this application, the following describes a lithium-ion pouch battery as an example.

A lithium-ion battery includes a packaging bag, an electrode assembly, a positive tab, a first bonding piece, a negative tab, and a second bonding piece. The electrode assembly includes a positive electrode plate, a separator, and a negative electrode plate. The positive electrode plate includes an aluminum foil and a positive active material layer. A first groove is created on the positive active material layer. One end of the positive tab is located in the first groove and welded to the aluminum foil, and the other end of the positive tab extends out of the packaging bag. The first bonding piece is partially disposed in the first groove to fill the clearance between the positive tab and the positive active material layer. The first bonding piece is partially disposed between the positive tab and a top sealing portion of the packaging bag to seal the clearance between the positive tab and the top sealing portion of the packaging bag.

The negative electrode plate includes a copper foil and a positive active material layer. A second groove is created on the negative active material layer. One end of the negative tab is located in the second groove, and welded to the copper foil, and the other end of the negative tab extends out of the packaging bag. The second bonding piece is partially disposed in the second groove to fill the clearance between the negative tab and the negative active material layer. The second bonding piece is partially disposed between the negative tab and the top sealing portion of the packaging bag to seal the clearance between the negative tab and the top sealing portion of the packaging bag.

### Test methods and devices

### (1) Measuring the Rockwell hardness

Taking a first bonding piece (a tab adhesive composite material) disc of 40 mm in diameter and 5 mm in thickness, and measuring the hardness by use of a standard Rockwell hardness tester at an accuracy compliant with the standards GB/T230 and ISO650.

### (2) Measuring the melting temperature of the material

<1> Measuring the melting temperature of the material by using a sessile-drop contact angle measuring instrument equipped with a heating device.
<2> Placing the square material specimen flat in the sessile-drop contact angle measuring instrument, and setting the heating rate to 5 °C/min (when the temperature is lower than 70 °C) or 1 °C/min (when the temperature is higher than 70 °C).
<3> In the heating process, measuring a contact angle between the material and the base by using an optical instrument in the measuring instrument, and, when the contact angle changes by 20° or more against the initial contact angle, determining that the temperature at this time is the melting temperature of the material.
<4> Determining the melting temperature of the material with reference to the temperature rise curve and the temperature record in the instrument.

### (3) Measuring the flatness of the electrode plate

Characterizing the flatness of the battery cell by use of a 3D Profile, and measuring the surface profile and flatness of the battery cell by using a Keyence VR5000 3D profilometer:
<1> Placing the battery cell flat, and scanning the battery cell by using the VR5000 profilometer.
<2> Setting a battery cell body of a specified size (length × width) as a datum plane upon completion of the scanning.
<3> Drawing a line from the top of the battery cell after the datum plane is set up, where the line is perpendicular to the length direction of the battery cell and passes through the battery cell body.
<4> Measuring and drawing lines from the middle and bottom of the battery cell in the same way.
<5> Flipping the battery cell over and repeating steps 3 to 4.
<6> Obtaining the resulting surface profile of the battery cell and a height difference at the plotted line position of the battery cell reflect the flatness of the battery cell, as exemplified below; and measuring a thickness difference at the position of the plotted line, so that the flatness of the battery cell is characterized by the thickness difference.

### Embodiment 1

### [Preparing a positive electrode plate]

Mixing lithium cobalt oxide (LCO, with an average particle diameter of 8 µm, obtained by sieving the particles by means of a particle sieving tool), PVDF, and conductive carbon black (SP) at a mass ratio of 97: 1.5: 1.5, and adding NMP as a solvent to form a positive active material layer slurry in which the solid content is 75 wt%, and stirring well. Applying the positive active material layer evenly onto a surface of a positive current collector aluminum foil by a coating process, and then drying the slurry at 90 °C to obtain a 120 µm-thick positive active material layer. Subsequently, repeating the above steps on the other surface of the aluminum foil to obtain a positive electrode plate coated with the positive active material layer on both sides, and then cold-pressing, slitting, and cutting the resulting positive electrode plate to obtain a positive electrode plate.

### [Preparing a negative electrode plate]

Mixing artificial graphite, conductive carbon black (Super P), styrene-butadiene rubber (SBR), and sodium carboxymethyl cellulose (CMC) at a mass ratio of 97: 1: 1: 1, adding deionized water to form a slurry in which the solid content is 75 wt%, and stirring well. Applying the slurry evenly onto one surface of a 6 µm-thick negative current collector copper foil, and drying the slurry at 85 °C to obtain a 120 µm-thick negative active material layer. Subsequently, repeating the above steps on the other surface of the copper foil to obtain a negative electrode plate coated with the negative active material on both sides. Cold-pressing, slitting, and cutting the resulting negative electrode plate to obtain a negative electrode plate ready for future use.

### [Preparing an electrolyte solution]

Mixing ethylene carbonate, propylene carbonate, diethyl carbonate, propyl propionate, and vinylene carbonate at a mass ratio of 20: 30: 20: 28: 2 to obtain a nonaqueous organic solvent. Subsequently, mixing a lithium salt LiPF₆ with the nonaqueous organic solvent at a mass ratio of 8: 92 to obtain an electrolyte solution.

### [Preparing a separator]

Using a 7 µm-thick porous polyethylene film as a separator.

### [Preparing a lithium-ion battery]

Removing a part of the positive active material layer from the positive electrode plate to expose the aluminum foil and form a first groove. Processing the positive tab and the first bonding piece for a second time to form a whole. Placing one end of the whole in the first groove, and welding the positive tab to the aluminum foil.

Removing a part of the negative active material layer from the negative electrode plate to expose the copper foil and form a second groove. Processing the negative tab and the second bonding piece for a second time to form a whole. Placing one end of the whole in the second groove, and welding the negative tab to the copper foil.

Stacking the above-prepared positive electrode plate, separator, and negative electrode plate, and then winding the stacked structure to form an electrode assembly, where the separator is located between the positive electrode plate and the negative electrode plate to serve a function of separation. Putting the electrode assembly into a packaging bag made of an aluminum laminated film, extending both the positive tab and the negative tab out of the packaging bag, drying the packaged electrode assembly, and then injecting the electrolyte solution. Performing steps such as vacuum sealing, static standing, chemical formation, degassing, and edge trimming to obtain a lithium-ion battery.

### Embodiments 2 to 6

Identical to Embodiment 1 except that in <Preparing a lithium-ion battery>, the thickness of the first filling portion is changed according to Table 1.

### Embodiments 7 to 11

Identical to Embodiment 1 except that in <Preparing a lithium-ion battery>, the ratio of the projected area of the first filling portion to the area of the second region is changed according to Table 1.

### Embodiments 12 to 16

Identical to Embodiment 1 except that in <Preparing a lithium-ion battery>, the length of the first colloid is changed according to Table 1.

### Embodiments 17 to 21

Identical to Embodiment 1 except that in <Preparing a lithium-ion battery>, the length of the second colloid is changed according to Table 1.

### Comparative Embodiment 1

Identical to Embodiment 1 except that in <Preparing a lithium-ion battery>, the first filling portion is omitted, as shown in Table 1.

**Table 1**

| Serial number | Depth of first groove h₁ | Thickness of first filling portion h₂ | Thickness of first part h₃ | Area ratio | Length of first groove b₁ | Length of first part b₂ | Length of first colloid b₃ | Length of second colloid b₄ | 500^{th}-cycle maximum thickness difference of battery cell plane |
|---|---|---|---|---|---|---|---|---|---|
| Comparative Embodiment 1 | 50 µm | No filling | 80 µm | 0% | 22.5 mm | 5 mm | 0 mm | 0 mm | 350 mm |
| Embodiment 1 | 50 µm | 60 µm | 80 µm | 70% | 22.5 mm | 5 mm | 21 mm | 21 mm | 100 mm |
| Embodiment 2 | 50 µm | 30 µm | 80 µm | 70% | 22.5 mm | 5 mm | 21 mm | 21 mm | 180 µm |
| Embodiment 3 | 50 µm | 50 µm | 80 µm | 70% | 22.5 mm | 5 mm | 21 mm | 21 mm | 120 mm |
| Embodiment 4 | 50 µm | 40 µm | 80 µm | 70% | 22.5 mm | 5 mm | 21 mm | 21 mm | 125 mm |
| Embodiment 5 | 50 µm | 80 µm | 80 µm | 70% | 22.5 mm | 5 mm | 21 mm | 21 mm | 150 mm |
| Embodiment 6 | 50 µm | 100 µm | 80 µm | 70% | 22.5 mm | 5 mm | 21 mm | 21 mm | 160 mm |
| Embodiment 7 | 50 µm | 60 µm | 80 µm | 20% | 22.5 mm | 5 mm | 21 mm | 21 mm | 240 mm |
| Embodiment 8 | 50 µm | 60 µm | 80 µm | 40% | 22.5 mm | 5 mm | 21 mm | 21 mm | 120 mm |
| Embodiment 9 | 50 µm | 60 µm | 80 µm | 60% | 22.5 mm | 5 mm | 21 mm | 21 mm | 130 mm |
| Embodiment 10 | 50 µm | 60 µm | 80 µm | 80% | 22.5 mm | 5 mm | 21 mm | 21 mm | 90 mm |
| Embodiment 11 | 50 µm | 60 µm | 80 µm | 100% | 22.5 mm | 5 mm | 21 mm | 21 mm | 88 mm |
| Embodiment 12 | 50 µm | 60 µm | 80 µm | 70% | 22.5 mm | 5 mm | 15 mm | 21 mm | 140 mm |
| Embodiment 13 | 50 µm | 60 µm | 80 µm | 70% | 22.5 mm | 5 mm | 18 mm | 21 mm | 130 mm |
| Embodiment 14 | 50 µm | 60 µm | 80 µm | 80% | 22.5 mm | 5 mm | 22 mm | 21 mm | 120 mm |
| Embodiment 15 | 50 µm | 60 µm | 80 µm | 90% | 22.5 mm | 5 mm | 22.5 mm | 21 mm | 135 mm |
| Embodiment 16 | 50 µm | 60 µm | 80 µm | 95% | 22.5 mm | 5 mm | 23 mm | 21 mm | 150 mm |
| Embodiment 17 | 50 µm | 60 µm | 80 µm | 70% | 22.5 mm | 5 mm | 21 mm | 15 mm | 140 mm |
| Embodiment is | 50 µm | 60 µm | 80 µm | 70% | 22.5 mm | 5 mm | 21 mm | 19 mm | 130 mm |
| Embodiment 19 | 50 µm | 60 µm | 80 µm | 80% | 22.5 mm | 5 mm | 21 mm | 22 mm | 120 mm |
| Embodiment 20 | 50 µm | 60 µm | 80 µm | 90% | 22.5 mm | 5 mm | 21 mm | 22.5 mm | 135 mm |
| Embodiment 21 | 50 µm | 60 µm | 80 µm | 95% | 22.5 mm | 5 mm | 21 mm | 23 mm | 150 mm |

The above data results show that:
(1) As can be seen from Embodiment 1 and Comparative Embodiment 1, by disposing the first filling portion at the clearance between the tab and the electrode plate, this application can reduce the thickness difference between the tab and the electrode plate, thereby effectively reducing the thickness difference of the battery cell plane, and improving the flatness of the battery cell.
(2) As can be seen from Embodiments 1 to 6, to the extent reasonable, with the increase of the thickness of the first filling portion, the thickness difference of the battery cell plane decreases gradually, that is, the amount of deformation of the battery cell is reduced. However, when the first filling portion is thicker than the first part (thickness of the tab), that is, in a case of overfilling, the thickness difference of the battery cell plane is increased, and the amount of deformation of the battery cell is increased.
(3) As can be seen from Embodiment 1 and Embodiments 7 to 11, by increasing the ratio of the projected area of the first filling portion to the area of the second region in the first groove, this application can effectively reduce the thickness difference of the battery cell plane, and reduce the amount of deformation of the battery cell.
(4) As can be seen from Embodiment 1 and Embodiments 12 to 16, by gradually increasing the length of the first colloid, this application can reduce the thickness difference between the tab and the electrode plate in the length direction of the electrode plate. In addition, with the increase of the length of the first colloid, the thickness difference of the battery cell plane decreases gradually, and the amount of deformation of the battery cell is reduced. However, when the length of the first colloid is greater than the length of the first groove, the overfilling increases the thickness difference of the battery cell plane and increases the amount of deformation of the battery cell.
(5) As can be seen from Embodiment 1 and Embodiments 17 to 21, by gradually increasing the length of the second colloid, this application can reduce the thickness difference between the tab and the electrode plate in the length direction of the electrode plate. In addition, with the increase of the length of the second colloid, the thickness difference of the battery cell plane decreases gradually, and the amount of deformation of the battery cell is reduced. However, when the length of the second colloid is greater than the length of the first groove, the overfilling increases the thickness difference of the battery cell plane and increases the amount of deformation of the battery cell.

What is described above is merely some embodiments of this application, and does not limit the patent scope of this application in any way. All equivalent structural variations and equivalent process variations made by using the content of the specification and the drawings of this application, and the content hereof used directly or indirectly in other related technical fields, still fall within the patent protection scope of this application.

## Claims

1. A secondary battery (1), **characterized in that** the secondary battery (1) comprises:
a housing (11);
an electrode assembly (12), wherein the electrode assembly (12) is located in the housing, the electrode assembly (12) comprises a first electrode plate (121), the first electrode plate (121) comprises a first current collector (1211)and a first active material layer (1212) disposed on the first current collector (1211), the first active material layer (1212) comprises a first groove (12121) that exposes a surface of the first current collector (1211), the surface of the first current collector (1211)exposed by the first groove (12121) is a first surface, and the first surface comprises a first region (12122) and a second region (12123) connected to each other;
a first tab (13), wherein the first tab (13) is electrically connected to the first current collector (1211), the first tab (13) comprises a first part (131)and a second part (132) connected to each other, a region of the first surface in direct contact with the first part (131)is the first region (12122), a remaining region other than the first region (12122) in the first surface is the second region (12123), and the second part (132) extends out of the housing (11) along a first direction;
a first bonding piece (14), wherein the first bonding piece (14) comprises a first sealing portion (141) and a first filling portion (142) connected to each other, at least a part of the first sealing portion (141) is disposed between the second part (132) and the housing (11) to bond the second part (132) and the housing (11) together; and, when viewed along a thickness direction of the first electrode plate (121), the first filling portion (142) is located in the second region (12123).

2. The secondary battery (1) according to claim 1, **characterized in that**
along the thickness direction of the first electrode plate (121), a depth of the first groove (12121) is h₁, a thickness of the first filling portion (142) is h₂, and a thickness of the first part (131)is h₃, wherein 0.5min{h₁, h₃} ≤ h₂ ≤ max{hi, h₃}.

3. The secondary battery (1) according to claim 2, **characterized in that** min{h₁, h₃} ≤ h₂ ≤ max{h₁, h₃}.

4. The secondary battery (1) according to claim 2, **characterized in that**
a thickness of the first sealing portion (141) is equal to a thickness of the first filling portion (142), and a material of the first sealing portion (141) is same as a material of the first filling portion (142), wherein 0.7min{h₁, h₃} ≤ h₂ ≤ max{hi, h₃}.

5. The secondary battery (1) according to claim 1, **characterized in that**
along the thickness direction of the first electrode plate (121), a ratio of a projected area of the first filling portion (142) to an area of the second region (12123) is: 40% to 100%.

6. The secondary battery (1) according to claim 1, **characterized in that**
the first filling portion (142) comprises a first colloid (1421) and a second colloid (1422); along a second direction, the first colloid (1421) is disposed on a first side (1311) of the first part (131), and the second colloid (1422) is disposed on a second side (1312) of the first part (131); the first side (1311) is disposed opposite to the second side (1312) of the first part (131); and both a projection of the first colloid (1421) and a projection of the second colloid (1422) along the thickness direction of the first electrode plate (121) are located in the second region (12123), wherein the first direction is perpendicular to the second direction.

7. The secondary battery (1) according to claim 6, **characterized in that**
along the first direction, a length of the first groove (12121) is b₁, a length of the first part (131)is b₂, and a length of the first colloid (1421) is b₃, satisfying: 0.5b₂ ≤ b₃ ≤ b₁; and/or
along the first direction, a length of the first groove (12121) is b₁, a length of the first part (131)is b₂, and a length of the second colloid (1422) is b₄, satisfying: 0.5b₂ ≤ b₄ ≤ b₁.

8. The secondary battery (1) according to claim 6, **characterized in that**
along the second direction, a width of the first groove (12121) is k₁, a width of the first part (131)is k₂, a width of the first colloid (1421) is k₃, a width of the second colloid (1422) is k₄, and k₂ + k₃ + k₄ + 1 mm ≤ k₁.

9. The secondary battery (1) according to claim 6, **characterized in that**
the first filling portion (142) further comprises a third colloid (1423), and the third colloid (1423) is connected to the first colloid (1421) and the second colloid (1422); along the first direction, the third colloid (1423) is at least partially disposed between an end portion of the first part (131) and the first active material layer (1212); and the third colloid (1423) is disposed in the second region (12123).

10. The secondary battery (1) according to claim 6, **characterized in that**
the first colloid (1421) is connected to the first side (1311), and the second colloid (1422) is connected to the second side (1312).

11. The secondary battery (1) according to claim 1, **characterized in that**
the first sealing portion (141) is made of a material comprising at least one of polystyrene, polyethylene, or polypropylene.

12. The secondary battery (1) according to claim 1, **characterized in that**
the first filling portion (142) is made of a material satisfying the following conditions:
(1) a melting temperature of the material is higher than 100 °C; and
(2) a Rockwell hardness of the material is less than 100.

13. The secondary battery (1) according to claim 1, **characterized in that** the housing (11) is a packaging bag.

14. The secondary battery (1) according to any one of claims 1 to 13, **characterized in that**
the electrode assembly (12) further comprises a second electrode plate (122)and a separator (123), the separator (123) is located between the first electrode plate (121) and the second electrode plate (122), the second electrode plate (122)comprises a second current collector and a second active material layer disposed on the second current collector, the second active material layer comprises a second groove (12221) that exposes a surface of the second current collector, the surface of the second current collector exposed by the second groove (12221) is a second surface, and the second surface comprises a third region and a fourth region connected to each other;
the secondary battery (1) further comprises a second tab (15) and a second bonding piece (16); and
the second tab (15) is electrically connected to the second current collector, the second tab (15) comprises a third part and a fourth part connected to each other, a region of the first surface in direct contact with the first part (131)is the first region (12122),, a remaining region other than the third region in the second surface is a fourth region, and the fourth part extends out of the housing (11) along the first direction; and
the second bonding piece (16) comprises a second sealing portion and a second filling portion connected to each other, at least a part of the second sealing portion is disposed between the fourth part and the housing (11) to bond the fourth part and the housing (11) together, and, when viewed along a thickness direction of the second electrode plate (122), the second filling portion is located in the fourth region.

15. An electrochemical device, **characterized in that** the electrochemical device comprises the secondary battery (1) according to any one of claims 1 to 14.
